# EUROPÄISCHE PATENTSCHRIFT

(11) **EP 2 720 900 B1**
(45) Veröffentlichungstag und Bekanntmachung des Hinweises auf die Patenterteilung: **14.08.2019**
(21) Anmeldenummer: 12724083.6
(22) Anmeldetag: 26.05.2012
(51) Int. Cl.: B60K 6/48, B60L 3/04, B60R 16/03

(54) **VERFAHREN ZUR SICHEREN DEAKTIVIERUNG EINES HOCHSPANNUNGSNETZES EINES KRAFTFAHRZEUGS**
METHOD FOR THE SAFE DEACTIVATION OF A HIGH VOLTAGE NETWORK OF A MOTOR VEHICLE
PROCÉDÉ DE DÉSACTIVATION FIABLE D'UN RÉSEAU ÉLECTRIQUE À HAUTE TENSION D'UN VÉHICULE AUTOMOBILE

(30) Priorität: 15.06.2011 DE 102011104224
(43) Veröffentlichungstag der Anmeldung: 23.04.2014
(73) Patentinhaber: Audi AG, 85045 Ingolstadt (DE); Volkswagen AG, 38436 Wolfsburg (DE)
(72) Erfinder: THÖMMES, Marco, 85049 Ingolstadt (DE); FELKEL, Thomas, 85049 Ingolstadt (DE)
(74) Vertreter: Herbst, Matthias Heinz
(86) Internationale Anmeldenummer: PCT/EP2012/002258
(87) Internationale Veröffentlichungsnummer: WO 2012/171612

(56) Entgegenhaltungen:
- DE-A1- 10 109 078
- DE-A1-102005 052 782
- DE-A1-102009 051 293
- DE-A1-102011 104 819

## Beschreibung

Die Erfindung betrifft ein Verfahren zur sicheren Deaktivierung eines Hochspannungsnetzes eines Kraftfahrzeugs während eines Diagnose- und/oder Reparaturvorgangs sowie ein Kraftfahrzeug.

Kraftfahrzeuge, die auch mittels elektrischer Energie betrieben werden können, sind bekannt, wobei sowohl Elektrokraftfahrzeuge, also solche, die ihre Antriebsenergie allein aus einem elektrischen Energiespeicher, insbesondere einer Hochspannungsbatterie, beziehen, als auch Hybridfahrzeuge, bei denen die Antriebsenergie neben der Hochspannungsbatterie auch aus anderen Energiequellen, insbesondere fossilen Energiequellen, gewonnen werden kann, bereits offenbart wurden.

In solchen Kraftfahrzeugen ist es daher bekannt, parallel ein Niedrigspannungsnetz mit einer Niedrigspannungsbatterie, beispielsweise einer 12 V-Batterie, und ein Hochspannungsnetz mit einer Hochspannungsbatterie, wobei die Spannung des Hochspannungsnetzes höher als die Spannung des Niedrigspannungsnetzes ist, insbesondere größer als 50 V, beispielsweise im Bereich von 150 bis 270 V, zu betreiben. Das Hochspannungsnetz wird häufig mit dem Niedrigspannungsnetz über einen Gleichspannungswandler (DC-DC-Wandler) gekoppelt, um einen Energieaustausch zu erlauben. An das Hochspannungsnetz angeschlossen ist ferner eine Elektromaschine, die sowohl als Motor als auch als Generator betrieben werden kann. Im generatorischen Betrieb speist die Elektromaschine elektrische Energie in Form von Hochspannung in das Hochspannungsnetz die zum Laden der Hochspannungsbatterie genutzt werden kann. Ferner kann meist ein Ladegerät an das Hochspannungsnetz angeschlossen werden, dass externe Energie zum Laden der Hochspannungsbatterie zur Verfügung stellt. Hochspannungsnetze, die weitere elektrische Verbraucher aufweisen, sind auch bereits bekannt, wobei beispielsweise eine Klimaanlage wenigstens teilweise über das Hochspannungsnetz angeschlossen werden kann.

Üblicherweise sind den an die verschiedenen Bordnetze angeschlossenen Vorrichtungen Steuergeräte zugeordnet, die den Betrieb der Vorrichtungen steuern. Beispielsweise können den Batterien, einem Gleichspannungswandler, einem Elektromotor, einem Ladegerät bzw. einem Anschluss dafür, und weiteren Komponenten Steuergeräte zugeordnet sein. Ein solches Steuergerät kann auch eine Logik umfassen, die beispielsweise im Falle einer Hochspannungsbatterie deren Schütze steuert. Diese Steuergeräte werden üblicherweise aus dem Niedrigspannungsnetz heraus betrieben. Werden sie nicht weiter mit Energie versorgt, tritt meist ein Failsafe-Zustand ein, der die von ihnen gesteuerte Vorrichtung vom jeweiligen Netz trennt.

Ein einfaches Beispiel sind gesteuerte Schalter, also beispielsweise Schütze oder Relais, die die Hochspannungsbatterie mit dem Hochspannungsnetz verbinden. Diese Schalter werden aus dem Niedrigspannungsnetz heraus betrieben und bleiben nur so lange geschlossen, wie sie bestromt sind, das bedeutet, wird die Niedrigspannungsversorgung der Schalter getrennt, öffnen die Schalter automatisch und trennen auch die Hochspannungsbatterie von dem Hochspannungsnetz.

Bei Kraftfahrzeugen mit einem Hochspannungsnetz muss immer dann, wenn am Kraftfahrzeug gearbeitet wird, also während eines Diagnose- und/oder Reparaturvorgangs (Service), das Hochspannungsnetz spannungsfrei geschaltet werden, also deaktiviert werden, um mögliche Gefährdungen von an dem Kraftfahrzeug arbeitenden Personen zu vermeiden, insbesondere im Sinne des Berührschutzes. Im Folgenden soll unter Deaktivierung des Hochspannungsnetzes das Spannungsfrei-Schalten des Hochspannungsnetzes verstanden werden. Derzeit sind verschiedene Deaktivierungskonzepte für Hochspannungssysteme bekannt, die jedoch verschiedene Nachteile aufweisen und nicht zufriedenstellend sind.

Beispielsweise wurde vorgeschlagen, ein spezielles Bauteil, häufig "service disconnect" genannt, vorzusehen, das beispielsweise als Stecker oder Steckmodul realisiert werden kann und üblicherweise in der Hochspannungsbatterie selbst verbaut ist. Wird das Bauteil herausgezogen, so wird die Hochspannungsbatterie durch hartes Auftrennen der Leitungen von dem Hochspannungsnetz getrennt und dieses mithin deaktiviert. Gleichzeitig ist es notwendig, eine bestimmte Klemme zu setzen, die das neue Aktivieren des Hochspannungsnetzes vermeidet. Diese Lösung weist eine Vielzahl von Nachteilen auf.

So ist das Bauteil "service disconnect" zunächst sehr teuer und benötigt einen großen Bauraum im Kraftfahrzeug, der mit der benötigten Stromtragfähigkeit des Bauteils weiter ansteigt. Ein weiterer Nachteil ist, dass aufgrund des geringen verfügbaren Bauraums in vielen Kraftfahrzeugen es nicht möglich ist, das Bauteil "service disconnect" standardisiert an einer bestimmten Position vorzusehen. Zudem muss das Bauteil zwangsläufig in der Nähe der Hochspannungsbatterie bzw. in dieser selber vorgesehen werden. Daraus ergeben sich Probleme mit der Zugänglichkeit, insbesondere dann, wenn beispielsweise die Hochspannungsbatterie im Unterboden des Kraftfahrzeugs verbaut ist oder dergleichen. Sind in einem Kraftfahrzeug mehrere Hochspannungsbatterien vorgesehen, werden auch mehrere derartige Bauteile genötigt, da jede Hochspannungsbatterie eigene zu trennende Leitungen aufweist

DE 10 2005 052782 A1 offenbart ein Hybridfahrzeug, wobei das Bordnetz und das Traktionsnetz über einen DC/DC-Wandler gekoppelt sind, über den elektrische Energie zwischen dem Traktionsnetz und dem Bordnetz austauschbar ist, wobei mittels einer Steuereinheit ein Verbraucher in der Weise steuerbar ist, dass Betriebsarten, die eine Energieentnahme aus dem Bordnetz bewirken, die oberhalb eines vorfestgelegten Schwellenwertes liegen, unterbunden werden, solange dem Bordnetz über den DC/DC-Wandler nicht elektrische Energie zugeführt wird. Eine Steuereinheit kann ein Schließen einer Schaltvorrichtung zwischen dem Traktionsenergiespeicher und den Traktionsnetz beziehungsweise auch ein Öffnen desselben auslösen. In einem Ruhezustand des Hybridfahrzeugs, beispielsweise wenn dieses geparkt abgestellt ist, befindet sich die Schaltvorrichtung in einer geöffneten Stellung, so dass der Traktionsenergiespeicher von dem Traktionsnetz abgetrennt ist. Ein Schließen der Schaltvorrichtung kann erfolgen, wenn Signale diverser Erfassungsmittel ein vorgegebenes Ereignis anzeigen, beispielsweise das Fahrzeug entriegelt wurde und eine Belastung des Fahrersitzes durch ein Gewicht erfolgt ist.

DE 101 09 078 A1 offenbart ein Kraftfahrzeug, das eine Reihe von elektrischen Verbrauchern zur Stromversorgung, eine Hochvoltbatterie und Verbindungsleitungen mit Steckern zwischen diesen aufweist, wobei zur Vermeidung starker Kontaktbelastung und Vermeidung von Lichtbögen vor dem Trennen eines Steckers die Stromversorgung unterbrochen werden soll. Ein Steuergerät unterbricht die Stromversorgung, wenn dieses Signale erhält, welche einen Stillstand des Kraftfahrzeugs anzeigen.

Der Erfindung liegt daher die Aufgabe zugrunde, ein demgegenüber verbessertes Verfahren anzugeben, das ein günstiges, einfach zu realisierendes und sicheres Deaktivieren des Hochspannungsnetzes erlaubt.

Zur Lösung dieser Aufgabe ist bei einem Verfahren der eingangs genannten Art erfindungsgemäß vorgesehen, dass durch eine erste Bedienaktion an einer mit einem Bussystem des Kraftfahrzeugs verbundenen externen Prüfvorrichtung ein erstes Triggersignal auf das Bussystem des Kraftfahrzeugs gegeben wird, wobei bei Empfang des Triggersignals durch wenigstens ein Steuergerät des Kraftfahrzeugs das Hochspannungsnetz derart deaktiviert wird, dass es nur durch ein zweites, durch eine definierte zweite Bedienaktion erzeugtes Triggersignal wieder aktivierbar ist.

Erfindungsgemäß ist mithin kein komplexes und Bauraum verbrauchendes "service disconnect"-Bauteil erforderlich, welches unter Umständen noch schwer zugänglich ist, sondern die Deaktivierung erfolgt über eine Bedienaktion, die über Bedienelemente des Kraftfahrzeugs selbst - hierbei bevorzugt eine Kombination von Bedienhandlungen, die durch den Fahrer nicht durchgeführt werden kann oder durchgeführt wird - oder an einer externen Prüfvorrichtung, häufig auch als Tester bezeichnet, stattfindet. Eine solche externe Prüfvorrichtung wird meist über einen Diagnoseanschluss mit dem Bussystem des Kraftfahrzeugs verbunden, um beispielsweise Busnachrichten abfragen zu können, Diagnosen über Busnachrichten anstoßen zu können und dergleichen. Mit besonderem Vorteil kann durch eine bestimmte Bedienaktion an der externen Prüfvorrichtung nun auch auf sichere Weise das erste Triggersignal erzeugt werden, welches ein Deaktivieren des Hochspannungsnetzes zur Folge hat. Mit besonderem Vorteil wird das Hochspannungsnetz jedoch auch gegen eine Wiederinbetriebnahme gesichert, denn lediglich durch eine zweite Bedienaktion, die ein zweites Triggersignal auslöst, ist es möglich, das Hochspannungsnetz wieder unter Hochspannung zu setzen. Dies ergibt sich aus der Anforderung, dass das Hochspannungssystem ab dem Zeitpunkt der Außerbetriebnahme bis zur gewollten Wiederinbetriebnahme gegen ein Wiederaktivieren gesichert sein muss, um mögliche Gefährdungen von an dem Kraftfahrzeug arbeitenden Personen zu vermeiden. Dies gilt für alle möglichen Fehler, also Software- und Hardwarefehler, genauso wie bei oder nach Unterbrechung der Niederspannungsversorgung am Niederspannungsnetz. Lediglich durch die zweite Bedienaktion ist es möglich, das Hochspannungsnetz wieder in Betrieb zu nehmen.

Ein weiterer Vorteil der vorliegenden Erfindung ist es, dass, beispielsweise bei allen Kraftfahrzeugen eines Herstellers, ein einheitlicher Prozess zum Deaktivieren und zum erneuten Aktivieren eines Hochspannungssystems geschaffen werden kann, mithin keine Rücksicht auf unterschiedliche Verbauorte eines "service disconnect" genommen werden muss. Es ist insgesamt ein sicheres, einfach durchzuführendes, günstig zu realisierendes, Bauraum sparendes und gegen eine versehentliche Wiederinbetriebnahme gesichertes Deaktivieren des Hochspannungsnetzes möglich.

Eine Bedienaktion an Bedienelementen des Kraftfahrzeugs kann dabei idealerweise die Betätigung von wenigstens zwei ohnehin vorgesehenen Bedienelementen des Kraftfahrzeugs umfassen, beispielsweise also des Lenkrads, von Wahlhebeln, Schaltern, Lenkradstöcken und dergleichen, welche idealerweise räumlich getrennt vorliegen, so dass ein Fahrer auch beim "Spielen" mit Bedienelementen nicht ausversehen eine Deaktivierung des Hochspannungssystems bewirkt.

In besonders vorteilhafter Ausgestaltung der vorliegenden Erfindung kann jedoch vorgesehen sein, dass als die definierte zweite Bedienaktion die erneute Eingabe eines im Rahmen der ersten Bedienaktion eingegebenen, insbesondere personenspezifischen Passworts verwendet wird. Dabei kann das Passwort über ein Mensch-Maschine-Interface (MMI), beispielsweise einen Bordcomputer, innerhalb des Kraftfahrzeugs oder an der Prüfvorrichtung eingegeben werden. Auf diese Weise kann, insbesondere, wenn ein personenspezifisches Passwort als Teil der ersten und der zweiten Bedienaktion verwendet wird, das Hochspannungsnetz nur durch die Person wieder in Betrieb genommen werden, die es auch deaktiviert hat. Hierzu kann vorgesehen sein, dass das Passwort in einem Steuergerät des Kraftfahrzeugs gespeichert wird. Dies erhöht die Sicherheit weiter, nachdem nicht andere Personen, während die deaktivierende Person gerade nicht anwesend ist, ausversehen oder gezielt das Hochspannungssystem wieder in Betrieb nehmen. Somit kann sicher am Kraftfahrzeug bzw. dem Hochspannungsnetz gearbeitet werden. Bevorzugt ist es auch hier, wenn eine externe Prüfvorrichtung verwendet wird, da auf dieser besonders einfach personenspezifische Passwörter beispielsweise für die Personen einer Werkstatt realisiert werden können. Dann ist eine auf ein Deaktivieren folgende Wiederinbetriebnahme nur mittels des Testers möglich.

Wie bereits erwähnt, soll beim Deaktivieren des Hochspannungsnetzes dieses spannungsfrei geschaltet werden. Dazu ist es in jedem Fall zweckmäßig, zur Deaktivierung des Hochspannungsnetzes wenigstens eine Hochspannungsbatterie von dem Hochspannungsnetz zu trennen, insbesondere alle vorhandenen Hochspannungsbatterien. Die Hochspannungsbatterie ist mit dem Hochspannungsnetz meistens über Schalter, das bedeutet, Schütze oder Relais, verbunden, die so ausgelegt sind, dass sie dann, wenn sie stromfrei geschaltet sind, automatisch öffnen und durch das Niedrigspannungsnetz betrieben werden. Mithin kann ein Trennen der Hochspannungsbatterie von dem Hochspannungsnetz einfach dadurch erreicht werden, dass die Niedrigspannungsversorgung der die Hochspannungsbatterie mit dem Hochspannungsnetz verbindenden Schalter ausgeschaltet wird, so dass eine automatische Öffnung als Failsafe-Zustand eintritt.

Ferner ist es jedoch zweckmäßig, dass ferner ein Gleichspannungswandler und/oder ein Verbrennungsmotor und/oder ein Ladegerät in einen Zustand geschaltet werden, in dem sie keine Hochspannung mehr in das Hochspannungsnetz einspeisen können. Auf diese Weise werden also alle Komponenten deaktiviert, insbesondere von dem Hochspannungsnetz getrennt bzw. in einen sonstigen bestimmten Zustand geschaltet, in dem sie keine Hochspannung mehr in das Hochspannungsnetz einspeisen bzw. induzieren können. Beispielsweise könnte ein laufender Verbrennungsmotor eine Elektromaschine generatorisch antreiben, so dass hierdurch eine Hochspannung entsteht. Auch über einen Gleichspannungswandler, der die Spannung des Niedrigspannungsnetzes in die Spannung des Hochspannungsnetzes umwandelt und umgekehrt, kann Energie durch das Anlegen von Hochspannung in das Hochspannungsnetz eingespeist werden, was unerwünscht ist. Daher werden diese Komponenten über ihre jeweiligen Steuergeräte in entsprechende Zustände verbracht, so dass das System auch diesbezüglich sicher deaktiviert ist.

In konkreter Ausgestaltung der vorliegenden Erfindung kann vorgesehen sein, dass wenigstens ein zentrales Steuergerät bei Empfang eines Triggersignals, also des ersten oder des zweiten Triggersignals, entsprechende Steuersignale an wenigstens ein weiteres Steuergerät einer zur Deaktivierung oder Aktivierung des Hochspannungsnetzes zu schaltenden Komponente des Kraftfahrzeugs übermittelt. In diesem Fall ist also wenigstens ein zentrales Steuergerät vorgesehen, welches ein zusätzliches Steuergerät sein kann, bevorzugt aber ein ohnehin vorgesehenes, um eine Funktion erweitertes Steuergerät ist. Dieses wirkt sozusagen als Verteiler, welcher den Deaktivierungs- und Aktivierungsbetrieb des Hochspannungsnetzes zentral steuert.

Dabei ist es vorteilhaft, wenn wenigstens zwei zentrale Steuergeräte verwendet werden. Auf diese Weise ist eine Redundanz gegeben, die sich beispielsweise dann, wenn eines der zentralen Steuergeräte Ziel einer aktuellen Wartung ist, und gegebenenfalls sogar ausgetauscht werden soll, als nützlich erweisen kann, nachdem ja, wie bereits beschrieben wurde, eine Wiederinbetriebnahmebedingung, beispielsweise ein Passwort, innerhalb des zentralen Steuergerätes gespeichert werden kann, um eine Wiederinbetriebnahme zu ermöglichen.

Ferner ermöglicht eine Ausgestaltung mit einem zentralen Steuergerät, dass ein ein Steuersignal empfangendes weiteres Steuergerät nach erfolgreicher Durchführung eines in dem Steuersignal enthaltenen Steuerbefehls ein Bestätigungssignal an das zentrale Steuergerät sendet. Es kann also mithin durch das wenigstens eine zentrale Steuergerät überprüft werden, ob der Steuerbefehl erfolgreich durchgeführt wurde, nachdem die weiteren Steuergeräte entsprechende Nachrichten über das Bussystem des Kraftfahrzeugs oder sonstige Kommunikationswege zurücksenden. Dies ist - neben dem Speichern eines gegebenenfalls vorgesehenen Passworts - ein weiterer vorteilhafter Nutzen zentraler Steuergeräte.

Besonders bevorzugt ist es, wenn nach einem Deaktivieren des Hochspannungsnetzes, insbesondere mittels wenigstens einer Messeinrichtung und/oder der Bestätigungssignale, überprüft wird, ob das Hochspannungsnetz spannungsfrei geschaltet ist und eine Bestätigung der Deaktivierung des Hochspannungsnetzes an wenigstens einer Anzeigevorrichtung des Kraftfahrzeugs dargestellt wird. Mithin wird die Sicherheit weiter erhöht, nachdem ein Feedback über das Deaktivieren des Hochspannungssystems gegeben wird, und zwar auf einer Anzeigevorrichtung des Kraftfahrzeugs, beispielsweise einem Kombinationsdisplay, so dass das Kraftfahrzeug alle sicherheitsrelevanten Funktionen übernimmt. Dies hängt damit zusammen, dass beispielsweise eine externe Prüfvorrichtung nicht sicherheitsrelevant entwickelt wird (und dieses auch einen enormen Aufwand zur Folge hätte), so dass eine externe Prüfvorrichtung lediglich den Trigger setzen kann und das Kraftfahrzeug alle sicherheitsrelevanten Funktionen übernimmt.

Im Zusammenhang mit der Anzeige der Deaktivierung, also der Spannungsfreiheit, auf einer Anzeigevorrichtung des Kraftfahrzeugs, aber auch der sicheren Abschaltung des Hochspannungsnetzes, der Sicherung gegen ein Wiedereinschalten und der Wiederinbetriebnahme, ist an dieser Stelle darauf hinzuweisen, dass die Vorgehensweise und Entwicklung bevorzugt nach der zum Zeitpunkt der Einreichung des Patents in Entwicklung befindlichen Norm ISO 26262 erfolgen kann, welche den Namen "Road vehicles - Functional safety" trägt. Diese definiert bestimmte Sicherheitsstufen (automotive safety integrity level - ASIL), welche bei der Entwicklung von Verfahren und Vorrichtungen im Kraftfahrzeug zu berücksichtigen sind, vorliegend also insbesondere bei den Deaktivierungs- und Wiederinbetriebnahmevorgängen und auch der Anzeige von Informationen.

Wie bereits erwähnt, ist nach einem Deaktivieren des Hochspannungsnetzes aufgrund des ersten Triggersignals eine neue Aktivierung des Hochspannungsnetzes nur auf der Basis des zweiten Triggersignals möglich. Um diese Ausgestaltung konkret zu realisieren, kann zweckmäßigerweise vorgesehen sein, dass bei einem Deaktivieren des Hochspannungsnetzes aufgrund des ersten Triggersignals wenigstens ein Speicherbit in wenigstens einem für das Aktivieren des Hochspannungsnetzes benötigten Steuergerät, insbesondere allen für das Aktivieren des Hochspannungsnetzes benötigten Steuergeräten, gesetzt wird, wobei bei gesetztem Speicherbit das jeweilige Steuergerät die ihm zugeordnete Komponente des Kraftfahrzeugs nicht in einen für die Aktivierung des Hochspannungsnetzes benötigten Zustand versetzen kann, und wobei das Speicherbit nur bei Vorliegen des zweiten Triggersignals wieder gelöscht wird. Dabei ist es zweckmäßig, wenn ein in einem dauerhaften Speicher des Steuergeräts, insbesondere einem EEPROM, abgelegtes Speicherbit verwendet wird. Es wird also vorgeschlagen, die Sicherung des Hochspannungssystems gegen Wiederinbetriebnahme, insbesondere bei und nach Unterbrechung der Niedrigspannungsversorgung, durch ein Speicherbit zu realisieren, das im jeweiligen Steuergerät, insbesondere allen betroffenen Steuergeräten oder zumindest im zentralen Steuergerät, im dauerhaften Speicher abgelegt wird. Solange dieses Speicherbit gesetzt ist, darf die Komponente nicht wieder in den aktiven Betrieb wechseln, beispielsweise durch das Schließen von Schaltern, die die Hochspannungsbatterie mit dem Hochspannungsnetz verbinden, eine Nutzung eines Gleichspannungswandlers zum Hochsetzen der Spannung des Niedrigspannungsnetzes und dergleichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: einen Ablaufplan des erfindungsgemäßen Verfahrens.

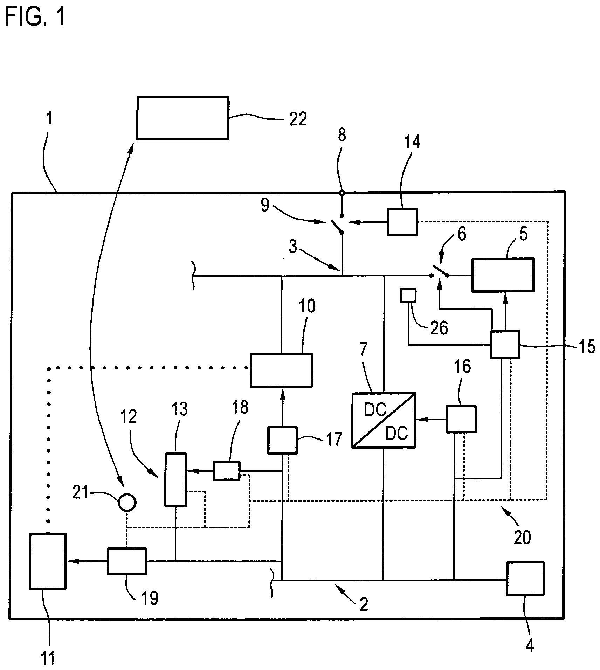

Fig. 1 zeigt eine Prinzipskizze eines erfindungsgemäßen Kraftfahrzeugs 1. In dem erfindungsgemäßen Kraftfahrzeug 1 sind zwei Bordnetze vorgesehen, vorliegend ein Niedrigspannungsnetz 2 und ein Hochspannungsnetz 3. Dem Niedrigspannungsnetz ist im vorliegenden Fall eine 12V-Niedrigspannungsbatterie 4 zugeordnet, dem Hochspannungsnetz eine Hochspannungsbatterie 5, die eine Spannung beispielsweise im Bereich von 150 - 270 V liefert, zugeordnet, die über Schalter 6 mit dem Hochspannungsnetz 3 verbunden ist. Das Niedrigspannungsnetz 2 und das Hochspannungsnetz 3 sind über einen Gleichspannungswandler 7 aneinander gekoppelt. Zum Laden der Hochspannungsbatterie 5 und gegebenenfalls auch der Niedrigspannungsbatterie 4 ist ferner ein Anschluss 8 für ein Ladegerät vorgesehen, welcher ebenso über einen Schalter 9 verfügt. Die Schalter 6, 9 können dabei als Hochspannungsschütze ausgelegt sein, die, wenn sie nicht bestromt sind, öffnen.

An das Hochspannungsnetz 3 ist ferner eine Elektromaschine 10 angeschlossen, die sowohl im generatorischen als auch im motorischen Betrieb betrieben werden kann. Das Kraftfahrzeug 1 umfasst ferner einen Verbrennungsmotor 11, es handelt sich mithin um ein Hybridfahrzeug. Der Verbrennungsmotor 11 und die Elektromaschine 10 sind mechanisch gekoppelt, so dass beispielsweise bei Betrieb des Verbrennungsmotors 11 dessen Antriebsenergie teilweise zum Laden der Hochspannungsbatterie 5 eingesetzt werden kann.

An das Hochspannungsnetz 3 und das Niedrigspannungsnetz 2 können selbstverständlich auch weitere als die hier gezeigten Komponenten angeschlossen sein, jedoch sind der Übersichtlichkeit halber nur die für die vorliegende Erfindung relevanten Komponenten gezeigt.

Das Kraftfahrzeug 1 umfasst ferner als Teil eines Mensch-Maschine-Interfaces 12 eine Anzeigevorrichtung 13.

Den bislang gezeigten Komponenten bzw. Vorrichtungen des Kraftfahrzeugs 1 sind jeweils den Betrieb der Komponenten steuernde, über das Niedrigspannungsnetz 2 betriebene Steuergeräte 14 - 19 zugeordnet, vorliegend dem Schalter 9 und dem Anschluss 8 ein Steuergerät 14, der Hochspannungsbatterie mit dem Schalter 6 ein Steuergerät 15, dem Gleichspannungswandler 7 ein Steuergerät 16, der Elektromaschine 10 ein Steuergerät 17, dem Mensch-Maschine-Interface 12 ein Steuergerät 18, und dem Verbrennungsmotor 11 ein Steuergerät 19. Die Steuergeräte kommunizieren über ein ebenso in Fig. 1 angedeutetes Bussystem 20, wobei es sich beispielsweise um einen CAN-Bus handeln kann. Das Bussystem 20 weist einen Diagnoseanschluss 21 auf, an den beispielsweise eine externe Prüfvorrichtung 22, häufig auch als Tester bezeichnet, angeschlossen werden kann.

Mit dem Kraftfahrzeug 1 kann das erfindungsgemäße Verfahren ausgeführt werden, welches im Folgenden näher erläutert werden soll. Dabei wirkt vorliegend das Steuergerät 15 als ein zentrales Steuergerät, es sei jedoch angemerkt, dass zum einen auch ein speziell vorgesehenes oder sonstiges Steuergerät als zentrales Steuergerät eingesetzt werden kann; vorteilhaft ist es insbesondere, wenn zwei Steuergeräte als zentrale Steuergeräte fungieren, wobei vorliegend beispielsweise das Steuergerät 16 als zweites zentrales Steuergerät zur Steigerung der Redundanz verwendet werden kann.

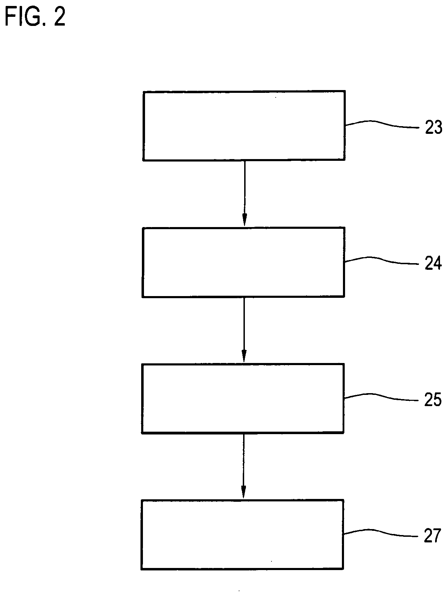

Der Ablauf des erfindungsgemäßes Verfahrens in einem Ausführungsbeispiel wird durch Fig. 2 näher erläutert. Das erfindungsgemäße Verfahren dient dazu, das Hochspannungsnetz 3 zu deaktivieren, mithin spannungsfrei zu schalten, und eine versehentliche Inbetriebnahme zu vermeiden, während gerade an dem Kraftfahrzeug 1, beispielsweise im Rahmen einer Wartung, gearbeitet wird.

In einem Schritt 23 wird durch eine erste Bedienaktion ein erstes Triggersignal erzeugt und auf das Bussystem 20 gegeben. Dies geschieht vorliegend, indem ein Benutzer eine entsprechende Funktion der Prüfvorrichtung 22 auswählt und an der Prüfvorrichtung 22 sein personenspezifisches Passwort eingibt, welches mit zur ersten Bedienaktion zählt und als Datum auch in dem ersten Triggersignal mit auf das Bussystem 20 gegeben wird.

In einem Schritt 24 empfängt das zentrale Steuergerät 15 das erste Triggersignal, speichert das Passwort und setzt bei sich selbst ein in einem dauerhaften Speicher abgelegtes Speicherbit. Steuersignale, enthaltend Steuerbefehle, an die Steuergeräte 14, 16, 17 und gegebenenfalls 19 werden ausgesandt und die Niedrigstromversorgung der Schalter 6 wird deaktiviert, so dass diese öffnen und somit die Hochspannungsbatterie 5 vom Hochspannungsnetz 3 trennen. Bei Empfang der Steuerbefehle durch die weiteren Steuergeräte 14, 16, 17 und 19 setzen diese bei sich ebenfalls ein Speicherbit in einem dauerhaften Speicher und verbringen die ihnen zugeordneten Komponenten 9, 7, 10 und 11 in einen Zustand, in dem vermieden wird, dass elektrische Energie in Form einer Hochspannung an das Hochspannungsnetz 3 weitergegeben wird. So sorgt das Steuergerät 14 dafür, dass der Schalter 9 geöffnet ist; das Steuergerät 16 steuert den Gleichspannungswandler 7 so an, dass keine Niedrigspannung aus dem Niedrigspannungsnetz 2 mehr in eine Hochspannung des Hochspannungsnetzes 3 umgewandelt wird. Bei der Elektromaschine 10 kann der generatorische Betrieb vermieden werden, bei dem Verbrennungsmotor 11 beispielsweise eine Kraftstoffeinspritzung, damit dessen Betrieb nicht indirekt zur Erzeugung von Hochspannung durch die Elektromaschine 10 führt. Insgesamt wird also das Hochspannungsnetz 3 derart deaktiviert, dass keine Spannungszufuhr über ein Ladegerät und in die Hochspannungsbatterie 5 mehr erfolgen kann und auch die Induzierung von Spannungen durch weitere Komponenten vermieden wird, mithin ein sicheres Arbeiten mit dem Kraftfahrzeug 1 möglich ist.

Solange das Speicherbit in den Steuergeräten 14, 15, 16, 17 und 19 gesetzt ist, ist es im Übrigen nicht mehr möglich, die Komponenten wieder so anzusteuern, dass eine Spannungseinkopplung in das Hochspannungsnetz 3 erfolgen kann.

Die weiteren Steuergeräte 14, 16, 17 und 19 senden ein Bestätigungssignal an das zentrale Steuergerät 15.

In einem Schritt 25 wird überprüft, ob die Deaktivierung erfolgreich war. Hierzu dienen zum einen die Bestätigungssignale der Steuereinrichtungen 14, 16, 17 und 19, zusätzlich wird aber auch eine Messeinrichtung 26, beispielsweise eine Spannungsmesseinrichtung, verwendet. Wird festgestellt, dass das Hochspannungsnetz 3 tatsächlich spannungsfrei ist, so wird eine entsprechende Nachricht an der Anzeigevorrichtung 13 ausgegeben, so dass eine an dem Kraftfahrzeug 1 arbeitende Person weiß, dass dies nun sicher möglich ist. Die Arbeiten können nun vorgenommen werden. Dank der gesetzten Speicherbits ist ein versehentliches oder aus anderen Gründen auftretendes Wiedereinschalten des Hochspannungssystems nicht möglich.

In einem Schritt 27 sind die Arbeiten an dem Kraftfahrzeug 1 dann abgeschlossen, so dass eine zweite Bedienaktion, die wiederum das personenspezifische Passwort enthält, an der externen Prüfvorrichtung 22 vorgenommen werden kann, woraufhin ein zweites Triggersignal, welches wiederum das Passwort enthält, auf das Bussystem 20 gegeben wird. Empfängt das zentrale Steuergerät 15 dieses zweite Triggersignal, so vergleicht es die Passwörter. Bei Übereinstimmung wird das Speicherbit wieder gelöst, die Schalter 6 werden wieder geschlossen und es werden Steuerbefehle an die weiteren Steuergeräte 14, 16, 17 und 19 gesendet, die dazu führen, dass die entsprechenden Komponenten wieder in ihren Normalzustand gebracht werden, beispielsweise also die Schalter 9 geschlossen werden, der Gleichspannungswandler 7 wieder Hochspannung aus der Niederspannung des Niederspannungsnetzes 2 erzeugen kann usw. Mit anderen Worten wird das Hochspannungsnetz 3 wieder aktiviert, was ebenso durch entsprechende Bestätigungssignale an die zentrale Steuergeräte 15 mitgeteilt werden kann.

Wie bereits erwähnt, ist es vorteilhaft, wenn zwei zentrale Steuergeräte, beispielsweise die Steuergeräte 15 und 16, genutzt werden, um hier eine Redundanz zu schaffen. Weiterhin sei angemerkt, dass in einem weiteren Ausführungsbeispiel des erfindungsgemäßen Verfahrens auch vorgesehen sein kann, dass die erste und die zweite Bedienaktion mit Bedienelementen des Kraftfahrzeugs 1 selbst, beispielsweise am Mensch-Maschine-Interface 12, vorgenommen werden kann. In diesem Fall wertet das Steuergerät 18 die Bedienhandlungen aus, welche natürlich ebenso ein Passwort umfassen können, und erzeugt das Triggersignal für das Bussystem 20.

## Patentansprüche

1. Verfahren zur sicheren Deaktivierung eines Hochspannungsnetzes (3) eines Kraftfahrzeugs (1) während eines Diagnose- und/oder Reparaturvorgangs,
**dadurch gekennzeichnet,**
**dass** durch eine erste Bedienaktion an einer mit einem Bussystem (20) des Kraftfahrzeugs (1) verbundenen externen Prüfvorrichtung (22) ein erstes Triggersignal auf das Bussystem (20) des Kraftfahrzeugs (1) gegeben wird, wobei bei Empfang des Triggersignals durch wenigstens ein Steuergerät (14-19) des Kraftfahrzeugs (1) das Hochspannungsnetz (3) derart deaktiviert wird, dass es nur durch ein zweites, durch eine definierte zweite Bedienaktion erzeugtes Triggersignal wieder aktivierbar ist.

2. Verfahren nach Anspruch 1,
**dadurch gekennzeichnet,**
**dass** als die definierte zweite Bedienaktion die erneute Eingabe eines im Rahmen der ersten Bedienaktion eingegebenen, insbesondere personenspezifischen Passworts verwendet wird.

3. Verfahren nach Anspruch 1 oder 2,
**dadurch gekennzeichnet,**
**dass** zur Deaktivierung des Hochspannungsnetzes (3) wenigstens eine Hochspannungsbatterie (5) von dem Hochspannungsnetz (3) getrennt wird.

4. Verfahren nach Anspruch 3,
**dadurch gekennzeichnet,**
**dass** ferner ein Gleichspannungswandler (7) und/oder ein Verbrennungsmotor (11) und/oder ein Ladegerät in einen Zustand geschaltet werden, in dem sie keine Hochspannung mehr in das Hochspannungsnetz (3) einspeisen können.

5. Verfahren nach einem der vorangehenden Ansprüche,
**dadurch gekennzeichnet,**
**dass** wenigstens ein zentrales Steuergerät (15, 16) bei Empfang eines Triggersignals entsprechende Steuersignale an wenigstens ein weiteres Steuergerät (14, 16, 17, 19) einer zur Deaktivierung oder Aktivierung des Hochspannungsnetzes (3) zu schaltenden Komponente des Kraftfahrzeugs (1) übermittelt.

6. Verfahren nach Anspruch 5,
**dadurch gekennzeichnet,**
**dass** wenigstens zwei zentrale Steuergeräte (15, 16) verwendet werden.

7. Verfahren nach Anspruch 5 oder 6,
**dadurch gekennzeichnet,**
**dass** ein ein Steuersignal empfangendes weiteres Steuergerät (14, 16, 17, 19) nach erfolgreicher Durchführung eines in dem Steuersignal enthaltenen Steuerbefehls ein Bestätigungssignal an das zentrale Steuergerät (15, 16) sendet.

8. Verfahren nach einem der vorangehenden Ansprüche,
**dadurch gekennzeichnet,**
**dass** nach einem Deaktivieren des Hochspannungsnetzes (5), insbesondere mittels wenigstens einer Messeinrichtung (26) und/oder der Bestätigungssignale, überprüft wird, ob das Hochspannungsnetz (5) spannungsfrei geschaltet ist und eine Bestätigung der Deaktivierung des Hochspannungsnetzes (5) an wenigstens einer Anzeigevorrichtung (13) des Kraftfahrzeugs (1) dargestellt wird.

9. Verfahren nach einem der vorangehenden Ansprüche,
**dadurch gekennzeichnet,**
**dass** bei einem Deaktivieren des Hochspannungsnetzes (3) aufgrund des ersten Triggersignals wenigstens ein Speicherbit in wenigstens einem für das Aktivieren des Hochspannungsnetzes (3) benötigten Steuergerät (14-17, 19), insbesondere allen für das Aktivieren des Hochspannungsnetzes benötigten Steuergeräten (14-17, 19), gesetzt wird, wobei bei gesetztem Speicherbit das jeweilige Steuergerät (14-17, 19) die ihm zugeordnete Komponente des Kraftfahrzeugs (1) nicht in einen für die Aktivierung des Hochspannungsnetzes (3) benötigten Zustand versetzen kann, und wobei das Speicherbit nur bei Vorliegen des zweiten Triggersignals wieder gelöscht wird.

10. Verfahren nach Anspruch 9,
**dadurch gekennzeichnet,**
**dass** ein in einem dauerhaften Speicher des Steuergeräts (14-17, 19), insbesondere einem EEPROM, abgelegtes Speicherbit verwendet wird.

## Claims

1. Method for the safe deactivation of a high voltage network (3) of a motor vehicle (1) during a diagnosis procedure and/or repair procedure,
**characterised in**
**that** by means of a first operating action at an external testing device (22) connected with a bus system (20) of the motor vehicle (1) a first trigger signal is given to the bus system (20) of the motor vehicle (1), wherein at the reception of the trigger signal by at least one control device (14-19) of the motor vehicle (1) the high-voltage network (3) is deactivated such that it can only be reactivated by a second trigger signal generated by a defined second operating action.

2. Method according to claim 1,
**characterised in**
**that** as the defined second operating action is used the renewed inputting of an, in particular person-specific, password which was inputted in the context of the first operating action.

3. Method according to claim 1 or 2,
**characterised in**
**that** for deactivating the high-voltage network (3) at least one high-voltage battery (5) is separated from the high-voltage network (3).

4. Method according to claim 3,
**characterised in**
**that** furthermore a DC voltage converter (7) and/or an internal combustion engine (11) and/or a charging device are switched into a condition in which they are unable to feed any more high-voltage into the high-voltage network (3).

5. Method according to any of the preceding claims,
**characterised in**
**that** at least one central control device (15, 16), at the reception of a trigger signal transmits corresponding control signals to at least one further control device (14, 16, 17, 19) of a component of the motor vehicle (1), which component is to be switched for the deactivation or activation of the high-voltage network (3).

6. Method according to claim 5,
**characterised in**
**that** at least two central control devices (15, 16) are used.

7. Method according to claim 5 or 6,
**characterised in**
**that** a further control device (14, 16, 17, 19) receiving a control signal, after successful implementation of a control command contained in the control signal, sends a confirmation signal to the central control device (15, 16).

8. Method according to any of the preceding claims,
**characterised in**
**that** after a deactivation of the high-voltage network (5), in particular by means of at least one measuring device (26) and/or of the confirmation signals, it is verified whether the high-voltage network (5) is switched to voltage free and a confirmation of the deactivation of the high-voltage network (5) is represented at at least one display device (13) of the motor vehicle (1).

9. Method according to any of the preceding claims,
**characterised in**
**that** after a deactivation of the high-voltage network (3) on the basis of the first trigger signal at least one memory bit is set in at least one control device (14-17, 19) required for the activation of the high-voltage network (3), in particular all control devices (14-17, 19) required for the activation of the high-voltage network, wherein when the memory bit is set, the respective control device (14-17, 19) cannot transfer the component, assigned to it, of the motor vehicle (1) into a condition required for the activation of the high-voltage network (3), and wherein the memory bit is deleted again only when the second trigger signal is present.

10. Method according to claim 9,
**characterised in**
**that** a memory bit is used which is stored in a permanent storage of the control device (14-17, 19), in particular an EEPROM.

## Revendications

1. Procédé de désactivation fiable d'un réseau électrique à haute tension (3) d'un véhicule automobile (1) pendant une opération de diagnostic et/ou de réparation,
**caractérisé en ce**
**qu'**un premier signal de déclenchement est donné, par une première action de commande au niveau d'un dispositif de contrôle externe (22) relié à un système bus (20) du véhicule automobile (1), sur le système bus (20) du véhicule automobile (1), dans lequel lors de la réception du signal de déclenchement par au moins un appareil de commande (14-19) du véhicule automobile (1), le réseau électrique à haute tension (3) est désactivé de telle sorte qu'il peut être réactivé uniquement par un deuxième signal de déclenchement généré par une deuxième action de commande définie.

2. Procédé selon la revendication 1,
**caractérisé en ce**
**que** la nouvelle saisie d'un mot de passe saisi dans le cadre de la première action de commande, en particulier propre à une personne, est utilisée en tant que deuxième action de commande définie.

3. Procédé selon la revendication 1 ou 2,
**caractérisé en ce**
**que** pour la désactivation du réseau électrique à haute tension (3), au moins une batterie haute tension (5) est déconnectée du réseau électrique à haute tension (3).

4. Procédé selon la revendication 3,
**caractérisé en ce**
**qu'**en outre un convertisseur de courant continu (7) et/ou un moteur à combustion interne (11) et/ou un appareil de recharge sont commutés dans un état, dans lequel ils ne peuvent plus injecter de haute tension dans le réseau électrique à haute tension (3).

5. Procédé selon l'une quelconque des revendications précédentes,
**caractérisé en ce**
**qu'**au moins un appareil de commande central (15, 16) transmet, lors de la réception d'un signal de déclenchement, des signaux de commande correspondants à au moins un autre appareil de commande (14, 16, 17, 19) d'un composant du véhicule automobile (1) à commuter pour la désactivation ou l'activation du réseau électrique à haute tension (3).

6. Procédé selon la revendication 5,
**caractérisé en ce**
**qu'**au moins deux appareils de commande centraux (15, 16) sont utilisés.

7. Procédé selon la revendication 5 ou 6,
**caractérisé en ce**
**qu'**un autre appareil de commande (14, 16, 17, 19) recevant un signal de commande envoie, après la réalisation réussie d'un ordre de commande contenu dans le signal de commande, un signal de confirmation à l'appareil de commande central (15, 16).

8. Procédé selon l'une quelconque des revendications précédentes,
**caractérisé en ce**
**qu'**après une désactivation du réseau électrique à haute tension (5), en particulier au moyen d'au moins un dispositif de mesure (26) et/ou des signaux de confirmation, il est vérifié si le réseau électrique à haute tension (5) est commuté sans tension et une confirmation de la désactivation du réseau électrique à haute tension (5) est représentée au niveau d'au moins un dispositif d'affichage (13) du véhicule automobile (1)

9. Procédé selon l'une quelconque des revendications précédentes,
**caractérisé en ce**
**que** lors d'une désactivation du réseau électrique à haute tension (3) en raison du premier signal de déclenchement, au moins un bit de mémoire est réglé dans au moins un appareil de commande (14-17, 19) nécessaire pour l'activation du réseau électrique à haute tension (3), en particulier tous les appareils de commande (14-17, 19) nécessaires pour l'activation du réseau électrique à haute tension, dans lequel pour le bit de mémoire réglé, l'appareil de commande (14-17, 19) respectif ne peut pas amener les composants du véhicule automobile (1) qui lui sont associés dans un état nécessaire pour l'activation du réseau électrique à haute tension (3), et dans lequel le bit de mémoire est à nouveau effacé uniquement en présence du deuxième signal de déclenchement.

10. Procédé selon la revendication 9,
**caractérisé en ce**
**qu'**un bit de mémoire déposé dans une mémoire durable de l'appareil de commande (14-17, 19), en particulier un EEPROM, est utilisé.
